# EUROPÄISCHE PATENTANMELDUNG

(11) **EP 2 317 123 A1**
(43) Veröffentlichungstag der Anmeldung: **04.05.2011**
(21) Anmeldenummer: 09013547.6
(22) Anmeldetag: 28.10.2009
(51) Int. Cl.: F03D 1/00, F03D 11/04

(54) **Anodenhalterung für kathodische Korrosionsschutzeinrichtungen von Gründungspfählen von Offshore-Windenergieanlagen, Gründungspfahl einer Offshore-Windenergieanlage und Verbindungsstruktur zwischen denselben, kathodische Korrosionsschutzvorrichtung für Gründungsrohre von Offshore-Windenergieanlagen sowie Offshore-Windenergieanlage**

(71) Anmelder: BARD Holding GmbH, 26725 Emden (DE)
(72) Erfinder: Ebert, Robert, 38528 Adenbüttel OT Rolfsbüttel (DE)
(74) Vertreter: Manasse, Uwe

(57) **Zusammenfassung**

Anodenhalterung für kathodische Korrosionsschutzeinrichtungen von Gründungsrohren von Offshore-Windenergieanlagen, umfassend: einen metallischen Zylinderring mit einer Längsachse sowie einer Außenseite und einer Innenseite, wobei auf der Innenseite über den Umfang eine Vielzahl von Positioniereinrichtungen zum, insbesondere werkzeuglosen, konzentrischen Selbstpositionieren und, insbesondere kraftschlüssigen, Fixieren des Zylinderrings an einem Gründungsrohr unter Schwerkraft bei Zusammenwirken mit an der Außenseite des Gründungsrohres befindlichen korrespondierenden Positioniemasen vorgesehen ist, Gründungsrohr einer Offshore-Windenergieanlage, dadurch gekennzeichnet, dass auf seiner Außenseite über einen Zylinderringbereich eine Mehrzahl von Positioniemasen vorgesehen ist und Verbindungsstruktur zwischen denselben, kathodische Korrosionsschutzvorrichtung für Gründungsrohre von Offshore-Windenergieanlagen und Offshore-Windenergieanlage mit derselben.

## Beschreibung

Die vorliegende Erfindung betrifft eine Anodenhalterung für kathodische Korrosionsschutzvorrichtungen von Gründungsrohren von Offshore-Windenergieanlagen, ein Gründungsrohr einer Offshore-Windenergieanlage, eine Verbindungsstruktur zwischen einem Gründungsrohr, einer Offshore-Windenergieanlage und einer Anodenhalterung, eine kathodische Korrosionsschutzvorrichtung für Gründungsrohre von Offshore-Windenergieanlagen sowie eine Offshore-Windenergieanlage mit mindestens einem Gründungsrohr und mit einer kathodischen Korrosionsschutzvorrichtung.

Bei Offshore-Windenergieanlagen ist ein aktiver Korrosionsschutz für die Gründungsrohre der Offshore-Windenergieanlagen üblich. Dieser kann in Form von kathodischem Korrosionsschutz mit Fremdstrom oder mit galvanischen Anoden erfolgen. Zur Anordnung der wesentlichen Komponenten einer sogenannten Fremdstromanlage, wie Anoden, Verteilerkästen, Kabel und Referenzelektroden, unter dem Wasserspiegel müssen bei einer derzeitigen Konstruktion Klemmringe unter Wasser von Tauchern festgezogen werden. Taucharbeiten verursachen sehr hohe Kosten und sind sehr wetterabhängig.

Der Erfindung liegt somit die Aufgabe zugrunde, eine Installation einer kathodischen Korrosionsschutzvorrichtung bei Offshore-Windenergieanlagen ohne Tauchereinsatz zu ermöglichen.

Erfindungsgemäß wird diese Aufgabe gemäß einem ersten Aspekt gelöst durch eine Anodenhalterung für kathodische Korrosionsschutzeinrichtungen von Gründungsrohren von Offshore-Windenergieanlagen, umfassend: einen metallischen Zylinderring mit einer Längsachse sowie einer Außenseite und einer Innenseite, wobei auf der Innenseite über den Umfang eine Vielzahl von Positioniereinrichtungen zum, insbesondere werkzeuglosen, konzentrischen Selbstpositionieren und, insbesondere kraftschlüssigen, Fixieren des Zylinderrings an einem Gründungsrohr unter Schwerkraft bei Zusammenwirken mit an der Außenseite des Gründungsrohres befindlichen korrespondierenden Positioniernasen vorgesehen ist.

Weiterhin wird diese Aufgabe gemäß einem zweiten Aspekt gelöst durch ein Gründungsrohr einer Offshore-Windenergieanlage, dadurch gekennzeichnet, dass auf seiner Außenseite über einen Zylinderringbereich eine Mehrzahl von Positioniernasen vorgesehen ist.

Gemäß einem dritten Aspekt wird diese Aufgabe gelöst durch eine Verbindungsstruktur zwischen einem Gründungsrohr einer Offshore-Windenergieanlage gemäß einem der Ansprüche 7 bis 10 und einer Anodenhalterung gemäß einem der Ansprüche 1 bis 6, wobei die Anodenhalterung konzentrisch um das Gründungsrohr angeordnet ist und die Positioniernasen des Gründungsrohres in den Positioniereinrichtungen der Anodenhalterung, insbesondere kraftschlüssig, fixiert sind.

Darüber hinaus wird diese Aufgabe gelöst durch eine kathodische Korrosionsschutzvorrichtung für Gründungsrohre von Offshore-Windenergienanlagen, umfassend: mindestens eine Anodenhalterung nach einem der Ansprüche 1 bis 6, mindestens eine an der mindestens einen Anodenhalterung angebrachte Anode, ein Schutzstromgerät, das zwischen der mindestens einen Anode und einem Gründungsrohr zum positiven Laden der mindestens einen Anode und zum negativen Laden des Gründungsrohres angeschlossen ist. Schließlich wird diese Aufgabe gelöst durch eine Offshore-Windenergieanlage mit mindestens einem Gründungsrohr und mit einer kathodischen Korrosionsschutzvorrichtung nach einem der Ansprüche 12 bis 14, wobei die kathodische Korrosionsschutzvorrichtung für jedes Gründungsrohr eine, vorzugsweise genau eine, Anodenhalterung aufweist.

Vorteilhafterweise ist bei der Anodenhalterung die Außenseite des Zylinderrings mit einer im wesentlichen nicht elektrisch leitenden Beschichtung versehen ist. Dadurch kann der Abstand der Anoden zum Gründungsrohr verkürzt werden, ohne einen Kurzschluss im System zu erzeugen. Durch die Beschichtung wird eine Isolationsschicht geschaffen, die das elektrische Feld gegen das Gründungsrohr abschirmt und somit eine Verkürzung des Abstandes ermöglicht.

Vorteilhafterweise ist der Zylinderring mit Durchgangslöchern in seiner Außenseite versehen. Durch besagte Durchgangslöcher kann sich das elektrische Feld auch im Bereich zwischen Zylinderring und Gründungsrohr ausbreiten und damit auch hier einen Korrosionsschutz gewährleisten. Vorteilhafterweise sind die Löcher in ihrer Größe und Anordnung so gewählt, dass sich das elektrische Feld nur in dem Maß ausbreiten kann, das für den Korrosionsschutz in dem Bereich zwischen dem Zylinderring und dem Gründungsrohr notwendig ist.

Gemäß einer besonderen Ausführungsform der Erfindung sind die Positioniereinrichtungen durch an die Innenseite des Zylinderrings angebrachte Führungsbleche gebildet.

Insbesondere kann dabei vorgesehen sein, dass die Positioniereinrichtungen sich verjüngende Führungsbahnen aufweisen. Zudem ist vorteilhafterweise an den schmalen Enden der Führungsbahnen eine Passung für eine jeweilige Positioniernase an dem Gründungspfahl vorgesehen.

Vorteilhafterweise ist bei dem Gründungsrohr die Vielzahl von Positioniernasen in einer ersten Ebene und in einer zweiten Ebene in Längsrichtung des Gründungsrohres angeordnet.

Insbesondere kann dabei vorgesehen sein, dass die Positioniernasen in der ersten Ebene gegenüber den Positioniernasen in der zweiten Ebene in Umfangsrichtung versetzt sind.

Zweckmäßigerweise weist mindestens eine der Positioniernasen in der zweiten Ebene eine zur Längsachse des Gründungsrohres senkrechte Anschlagfläche auf.

Gemäß einer besonderen Ausführungsform ist bei der kathodischen Korrosionsschutzvorrichtung eine Korrosionszustandserfassungseinrichtung zur automatischen Korrosionszustandserfassung des Gründungsrohres vorgesehen.

Noch bevorzugter ist auch eine Steuereinrichtung zur Steuerung des Schutzstromgeräts in Abhängigkeit von den Ergebnissen der Korrosionszustandserfassung durch die Einrichtung zur automatischen Korrosionszustandserfassung vorgesehen.

Der Erfindung liegt die überraschende Erkenntnis zugrunde, dass durch die spezielle Gestaltung der Anodenhalterung eine Anordnung von Anoden, Verteilerkästen, Kabeln und Referenzelektroden unter dem Wasserspiegel, zum Beispiel 20 m unter dem Wasserspiegel, ohne Tauchereinsatz an einem Gründungsrohr einer Offshore-Windenergieanlage installiert bzw. befestigt werden kann.

Während im Stand der Technik die Anordnung von Anoden auf zwei Ringebenen eines Gründungsrohres erforderlich ist, kann zudem zumindest in einer besonderen Ausfiihrungsform der erfindungsgemäßen kathodischen Korrosionsschutzvorrichtung die Anordnung auf einer Ringebene ausreichen.

Weitere Merkmale und Vorteile der Erfindung ergeben sich aus den beigefügten Ansprüchen und der nachfolgenden Beschreibung, in der ein Ausführungsbeispiel anhand der schematischen Zeichnungen im einzelnen erläutert ist, in denen:
- Figur 1: eine Seitenansicht von einer Offshore-Windenergieanlage mit einer kathodischen Korrosionsschutzvorrichtung gemäß einer besonderen Ausführungsform der Erfindung zeigt;
- Figur 2: ein Installationsschema der kathodischen Korrosionsschutzvorrichtung der Offshore-Windenergieanlage von Figur 1 zeigt;
- Figur 3: die Innenseite der Abwicklung des Zylinderrings einer Anodenhalterung der kathodischen Korrosionsschutzvorrichtung der Offshore-Windenergieanlage von Figur 1 zeigt;
- Figuren 4 und 5: Schritte des Aufsetzen bzw. Aufschiebens eines Zylinderrings auf ein Gründungsrohr der Offshore-Windenergieanlage von Figur 1 unter Schwerkraft zeigen;
- Figur 6: die Außenseite der Abwicklung des Zylinderrings einer Anodenhalterung der kathodischen Korrosionsschutzvorrichtung der Offshore-Windenergieanlage von Figur 1 mit befestigten Anoden zeigt; und
- Figur 7: ein Detail von Figur 6 mit angedeuteter Innenseite zeigt.

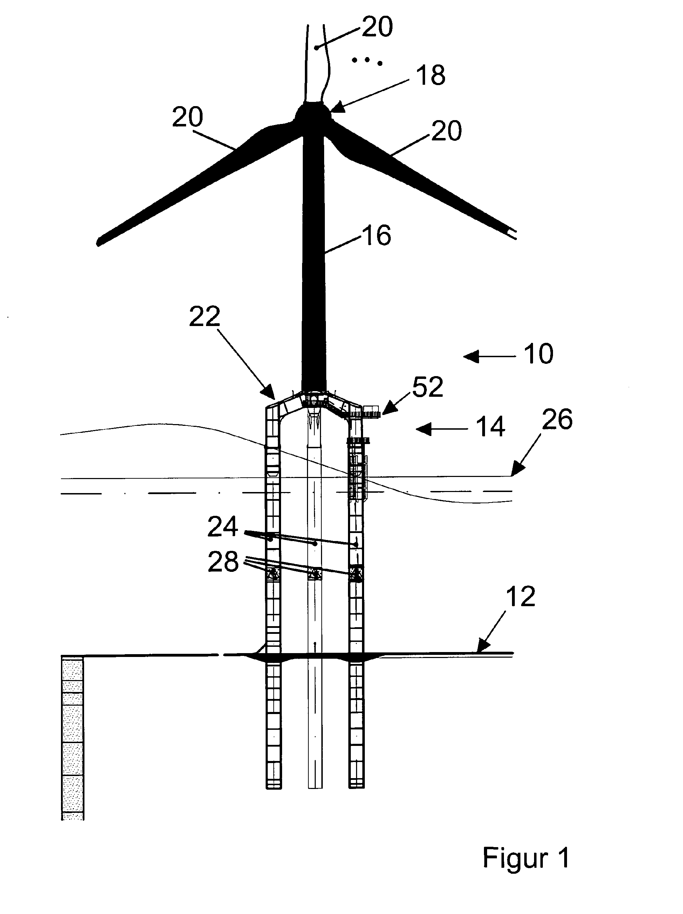

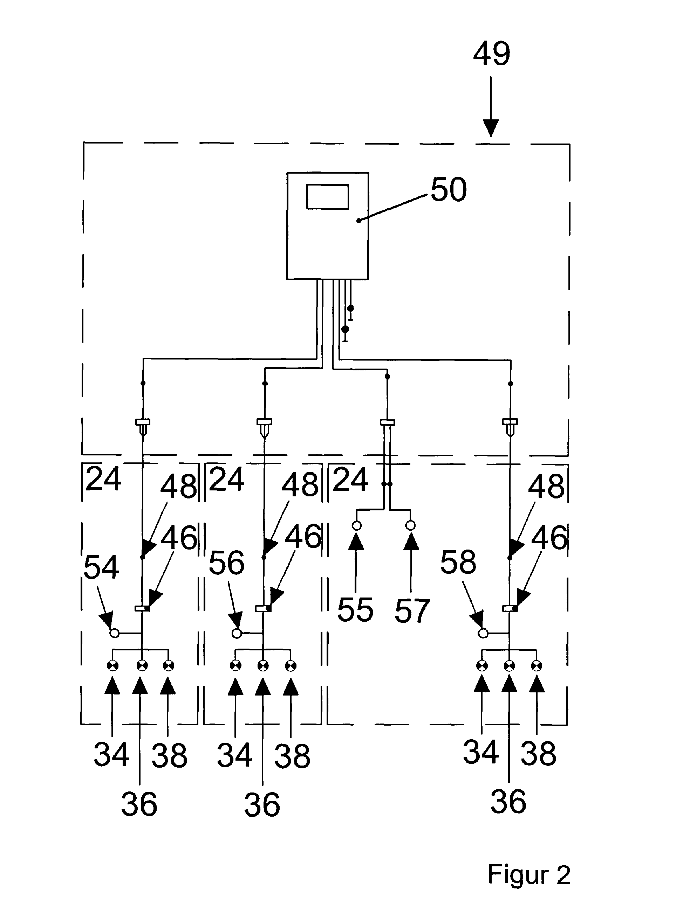

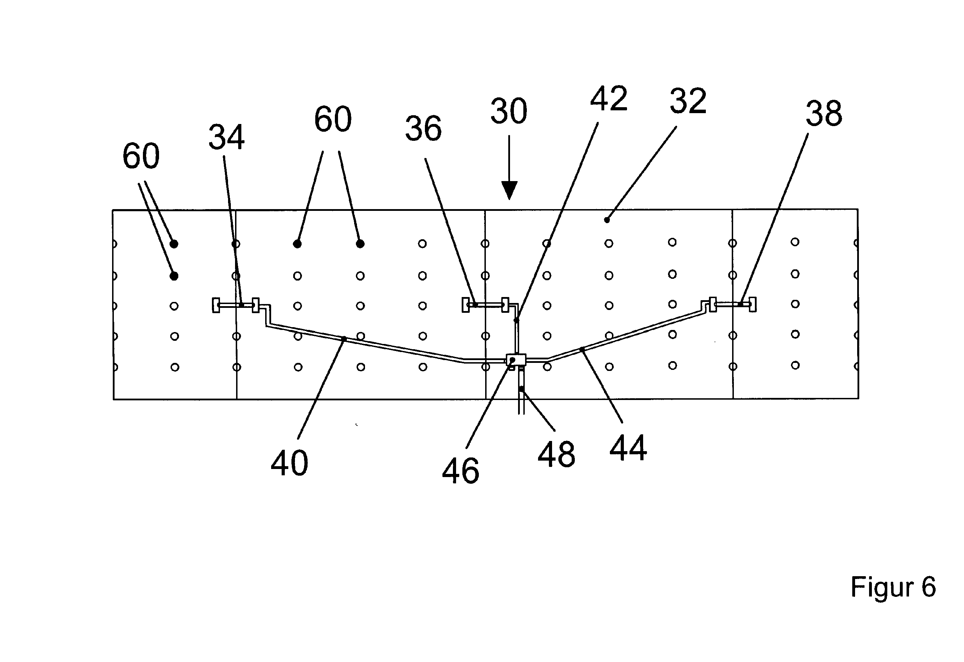

Figur 1 zeigt eine Seitenansicht von einer Offshore-Windenergieanlage 10, die im Meeresboden 12 installiert ist. Besagte Offshore-Windenergieanlage 10 besteht im wesentlichen aus einer Gründung 14, einem Turm 16 und einer Nabe 18 mit Rotorblättern 20, Besagte Gründung 14 ist ein sogenanntes "Tripile", das ein Stützkreuz 22 und drei Gründungsrohre 24 aufweist. Besagte Gründungsrohre 24 sind in den Meeresboden 12 gerammt. Unterhalb des Meeresspiegels 26 ist um jedes Gründungsrohr 24 auf derselben Ebene eine Anodenhalterung 28 konzentrisch angeordnet. Besagte Anodenhalterung 28 weist einen 3 m hohen Zylinderring aus Stahl auf. Die Außenseite 32 der Abwicklung des Zylinderrings 30 ist in Figur 6 gezeigt. Wie sich daraus ergibt, sind über den Umfang des Zylinderringes 30 drei Anoden 34, 36 und 38 äquidistant und im Installationszustand horizontal angeordnet. Besagte Anoden 34, 36 und 38 sind über jeweilige Kabel 40, 42 und 44 mit einem Verteilerkasten 46 verbunden, der wiederum über ein jeweiliges Kabel 48 mit einem Schutzstromgerät 50 mit einer integrierten Steuereinrichtung (nicht gezeigt) elektrisch verbunden ist (siehe auch Figur 2). Wie sich zudem anhand von Figur 2 ergibt, sind zwei Arten von Referenzelektroden zur Steuerung und Überwachung der kathodischen Korrosionsschutzvorrichtung 49, zu der unter anderem die Anodenhalterungen 28 mit jeweils drei Anoden 34, 36 und 38 und das Schutzstromgerät 50 gehören, vorgesehen. Zum einen handelt es sich dabei um zwei Steuerelektroden 55 und 57, die in rohrförmigen Behältern (nicht gezeigt) an einem Bootsanleger 52 (siehe Figur 1) vorgesehen sind, und zum anderen um Überwachungselektroden 54, 56 bzw. 58, die in der Nähe des jeweiligen Verteilerkastens 46 oder sogar im selbigem angeordnet sind.

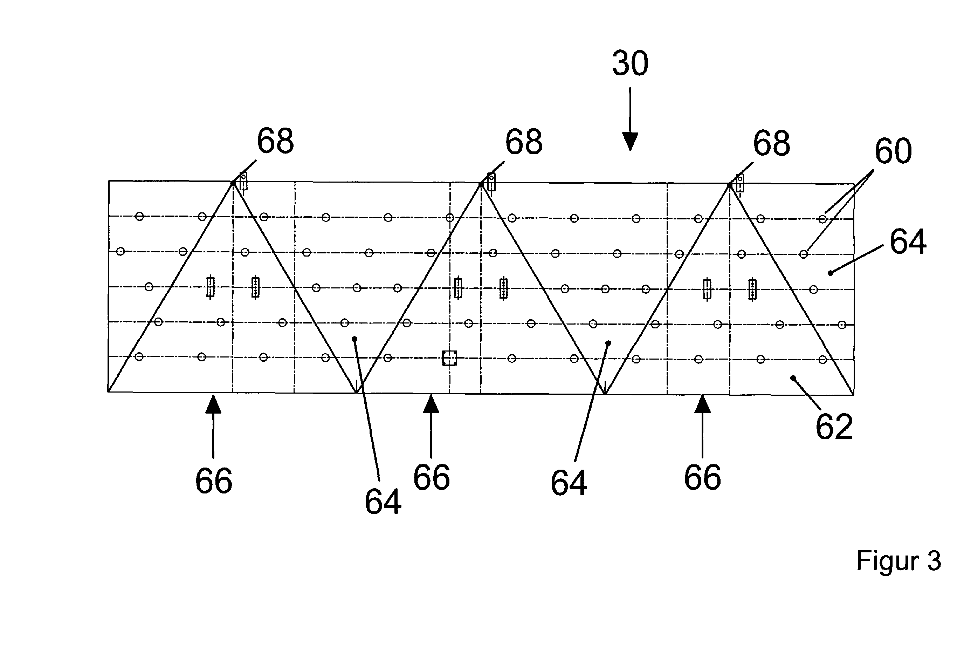

Wie sich aus den Figuren 3 und 6 ergibt, weist der Zylinderring 30 in seiner Außenseite 32 Durchgangslöcher 60 auf, die einen Durchmesser von 100 mm aufweisen und in einem Abstand a von 500 mm in Längsrichtung und in einem Abstand b von 909 mm in Umfangsrichtung angeordnet sind.

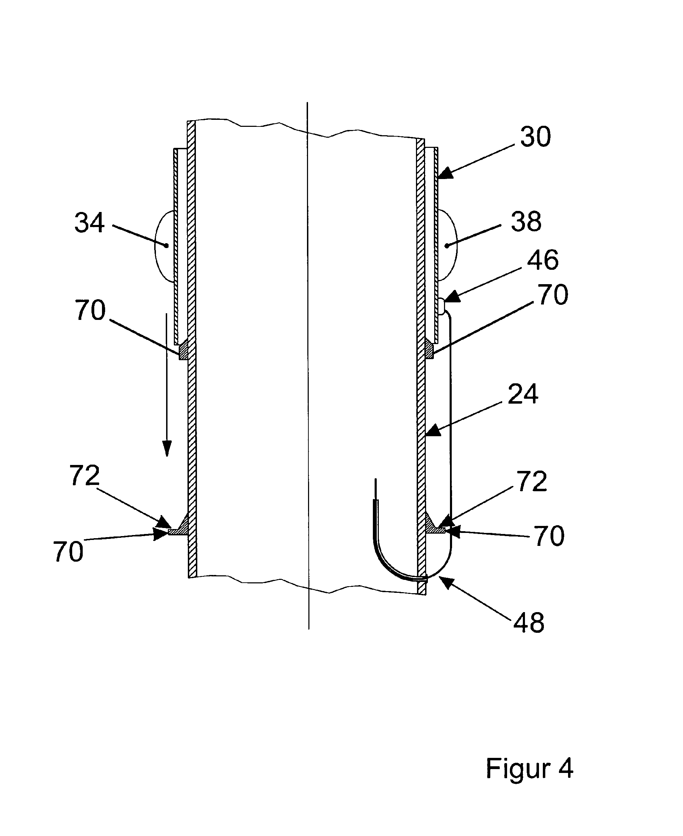

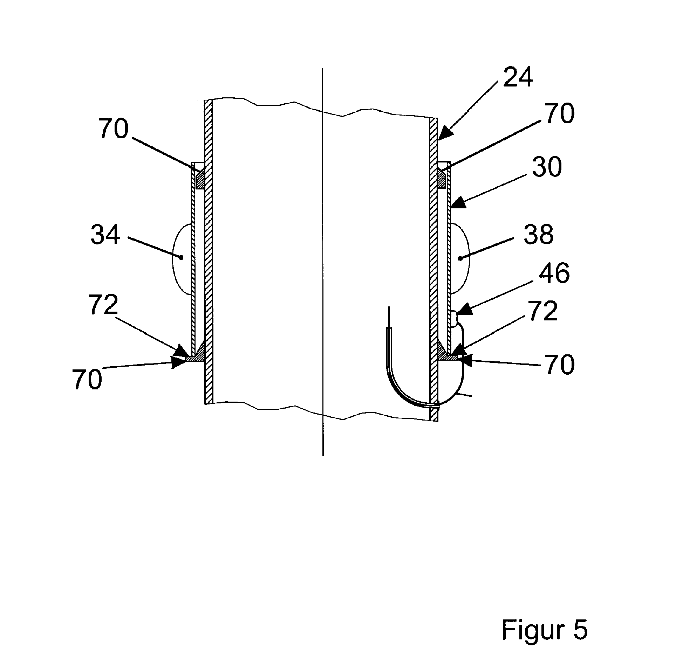

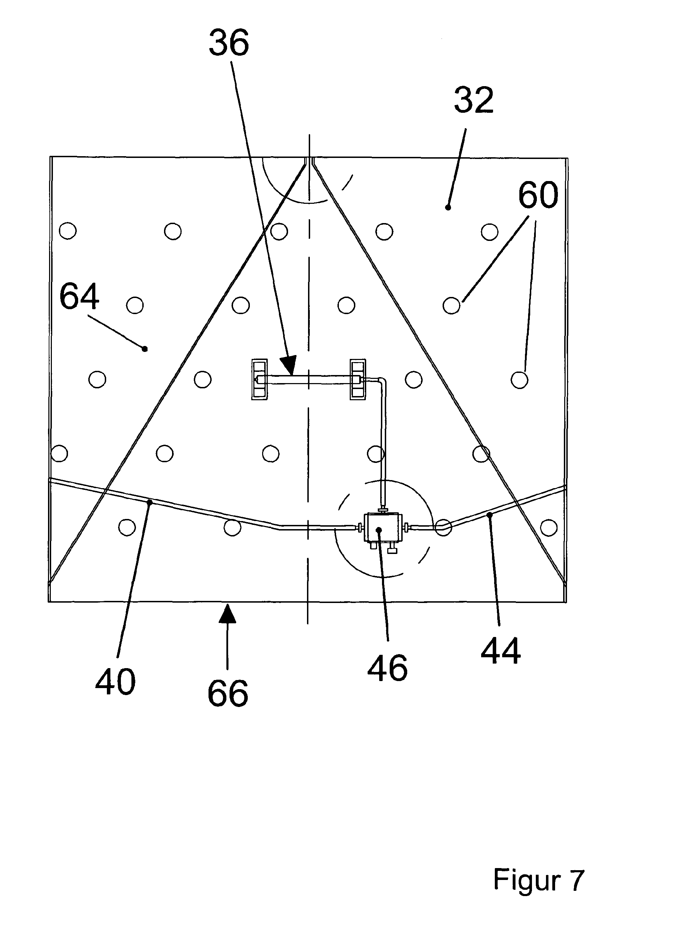

Wie sich weiterhin aus den Figuren 3 und 7 ergibt, sind auf der Innenseite 62 des Zylinderrings 30 konisch zulaufende Führungsbleche 64 aufgeschweißt. An den schmalen Enden der sich durch die Führungsbleche 64 ergebenden Führungsbahnen 66 ist jeweils eine Passung 68 für eine jeweilige Positioniernase (siehe Figuren 4 und 5) vorgesehen. Die Positioniernasen 70, auch Führungsknaggen genannt, sind in zwei Ebenen in Längsrichtung des Gründungsrohres 24 angeordnet (siehe Figuren 4 und 5). Die Positioniernasen 70 in der nach Installation oberen Ebene (auch erste Ebene genannt) haben zwei Funktionen. Die erste Funktion besteht in der Selbstpositionierung des Zylinderringes 30 unter Schwerkraft. Die Positionierung erfolgt, indem die an der Innenseite 62 des Zylinderringes 30 angeschweißten diagonal verlaufenden Führungsbleche 64 auf besagten Positioniernasen 70 in der oberen Ebene rutschen. Dadurch wird der Zylinderring 30 je nach anfänglicher Anordnung in Rotation gebracht und unter Schwerkraft in die vorgesehene Position gleiten gelassen. Die zweite Funktion der Positioniernasen 70 in der oberen Ebene besteht in der, vorzugsweise kraftschlüssigen, Fixierung des Zylinderringes 30 gegen Rotation, indem die Positioniernasen 70 in der oberen Ebene im oberen Bereich des Zylinderringes in die Passung 68 rutschen. Die untere Ebene (auch zweite Ebene genannt) der Positioniernasen 70 dient als Auflager in vertikaler Richtung. Dazu weisen die Positioniernasen 70 in der unteren Ebene eine zur Längsachse des Gründungsrohres 24 senkrechte Anschlagfläche 72 auf. Da die Positioniernasen 70 in der unteren Ebene nach außen hin konisch ausgebildet sind, erfolgt dadurch auch eine Verkeilung des Zylinderringes 30 in horizontaler Richtung im Installationszustand.

Der metallische Zylinderring 30 weist auf seiner Außenseite 32 eine im wesentlichen elektrisch nicht leitende Beschichtung (beispielsweise aus Derakane 8090 Epixodvinylesterharz).

Bei der kathodischen Korrosionsvorrichtung 49 handelt es um eine Vorrichtung zum Kathodenschutz mit vorgegebenem Strom (Impressed Current Cathodic Protection (ICCP)). Über die verschiedenen elektrischen Parameter, wie Spannung, Feldstärke, Leistung, kann die Funktionsweise der Korrosionsschutzvorrichtung überwacht und entsprechend nachjustiert werden. Die Feldstärke kann durch die Referenzelektroden gemessen werden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Anodenhalterung (28) für kathodische Korrosionsschutzeinrichtungen (49) von Gründungsrohren (24) von Offshore-Windenergieanlagen (10), umfassend:
einen metallischen Zylinderring (30) mit einer Längsachse sowie einer Außenseite (32) und einer Innenseite (62), wobei auf der Innenseite (62) über den Umfang eine Vielzahl von Positioniereinrichtungen zum, insbesondere werkzeuglosen, konzentrischen Selbstpositionieren und, insbesondere kraftschlüssigen, Fixieren des Zylinderrings (30) an einem Gründungsrohr unter Schwerkraft bei Zusammenwirken mit an der Außenseite (32) des Gründungsrohres (24) befindlichen korrespondierenden Positioniernasen (70) vorgesehen ist.

2. Anodenhalterung (28) nach Anspruch 1, **dadurch gekennzeichnet, dass** die Außenseite (32) des Zylinderrings (30) mit einer im wesentlichen nicht elektrisch leitenden Beschichtung versehen ist.

3. Anodenhalterung (28) nach Anspruch 1 oder 2, **dadurch gekennzeichnet, dass** der Zylinderring (30) mit Durchgangslöchern (60) in seiner Außenseite (32) versehen ist.

4. Anodenhalterung (28) nach einem der vorangehenden Ansprüche, **dadurch gekennzeichnet, dass** die Positioniereinrichtungen durch an die Innenseite (62) des Zylinderrings (30) angebrachte Führungsbleche (64) gebildet sind.

5. Anodenhalterung (28) nach einem der vorangehenden Ansprüche, **dadurch gekennzeichnet, dass** die Positioniereinrichtungen sich verjüngende Führungsbahnen (66) aufweisen.

6. Anodenhalterung (28) nach Anspruch 5, **dadurch gekennzeichnet, dass** an den schmalen Enden der Führungsbahnen (66) eine Passung (68) für eine jeweilige Positioniernase (70) an dem Gründungsrohr (24) vorgesehen ist.

7. Gründungsrohr (24) einer Offshore-Windenergieanlage (10), **dadurch gekennzeichnet, dass** auf seiner Außenseite (32) über einen Zylinderringbereich eine Mehrzahl von Positioniernasen (70) vorgesehen ist.

8. Gründungsrohr (24) nach Anspruch 7, **dadurch gekennzeichnet, dass** die Vielzahl von Positioniernasen (70) in einer ersten Ebene und in einer zweiten Ebene in Längsrichtung des Gründungsrohres (24) angeordnet ist.

9. Gründungsrohr (24) nach Anspruch 8, **dadurch gekennzeichnet, dass** die Positioniernasen (70) in der ersten Ebene gegenüber den Positioniernasen (70) in der zweiten Ebene in Umfangsrichtung versetzt sind.

10. Gründungsrohr (24) nach Anspruch 8 oder 9, **dadurch gekennzeichnet, dass** mindestens eine der Positioniernasen (70) in der zweiten Ebene eine zur Längsachse des Gründungsrohres (24) senkrechte Anschlagfläche (72) aufweist.

11. Verbindungsstruktur zwischen einem Gründungspfahl einer Offshore-Windenergieanlage (10) gemäß einem der Ansprüche 7 bis 10 und einer Anodenhalterung (28) gemäß einem der Ansprüche 1 bis 6, wobei die Anodenhalterung (28) konzentrisch um das Gründungsrohr (24) angeordnet ist und die Positioniernasen (70) des Gründungsrohres (24) in den Positioniereinrichtungen der Anodenhalterung (28), insbesondere kraftschlüssig, fixiert sind.

12. Kathodische Korrosionsschutzvorrichtung (49) für Gründungsrohre (24) von Offshore-Windenergienanlagen (10), umfassend:
- mindestens eine Anodenhalterung (28) nach einem der Ansprüche 1 bis 6,
- mindestens eine an der mindestens einen Anodenhalterung (28) angebrachte Anode (34, 36, 38),
- ein Schutzstromgerät (50), das zwischen der mindestens einen Anode und einem Gründungsrohr zum positiven Laden der mindestens einen Anode und zum negativen Laden des Gründungsrohres (24) angeschlossen ist.

13. Kathodische Korrosionsschutzvorrichtung (49) nach Anspruch 12, **dadurch gekennzeichnet, dass** eine Korrosionszustandserfassungseinrichtung zur automatischen Korrosionszustandserfassung des Gründungspfahls vorgesehen ist.

14. Kathodische Korrosionsschutzvorrichtung (49) nach Anspruch 13, **dadurch gekennzeichnet, dass** eine Steuereinrichtung zur Steuerung des Schutzstromgeräts (50) in Abhängigkeit von den Ergebnissen der Korrosionszustandserfassung durch die Einrichtung zur automatischen Korrosionszustandserfassung vorgesehen ist.

15. Offshore-Windenergieanlage (10) mit mindestens einem Gründungsrohr (24) und mit einer kathodischen Korrosionsschutzvorrichtung (49) nach einem der Ansprüche 12 bis 14, wobei die kathodische Korrosionsschutzvorrichtung (49) für jedes Gründungsrohr (24) eine, vorzugsweise genau eine, Anodenhalterung (28) aufweist.
